# EUROPEAN PATENT SPECIFICATION

(11) **EP 4 477 849 B1**
(45) Date of publication and mention of the grant of the patent: **27.05.2026**
(21) Application number: 23766716.7
(22) Date of filing: 02.03.2023
(51) Int. Cl.: B01D 46/24, F01N 3/022, B01D 39/20, C04B 35/565, C04B 35/63, C04B 38/00

(54) **SILICON CARBIDE HONEYCOMB FILTER**
SILICIUMCARBID-WABENFILTER
FILTRE EN RAYON EN CARBURE DE SILICIUM

(30) Priority: 10.03.2022 JP 2022037609
(43) Date of publication of application: 18.12.2024
(73) Proprietor: Mirai Casting Holdings, Ltd., Chuo-ku, Tokyo 104-0032 (JP)
(72) Inventor: OKAZAKI, Shunji, Miyako-gun, Fukuoka 800-0393 (JP)
(74) Representative: Diehl & Partner
(86) International application number: PCT/JP2023/007927
(87) International publication number: WO 2023/171540

(56) References cited:
- EP-A2- 2 862 616
- JP-A- 2010 281 306
- JP-A- 2011 240 332
- JP-A- 2013 198 884
- JP-A- 2019 171 238
- JP-A- 2021 133 283

## Description

### FIELD OF THE INVENTION

The present invention relates to a silicon carbide honeycomb filter for cleaning exhaust gases by removing particulate matter (PM), etc. from exhaust gases discharged from internal combustion engines such as diesel engines.

### BACKGROUND OF THE INVENTION

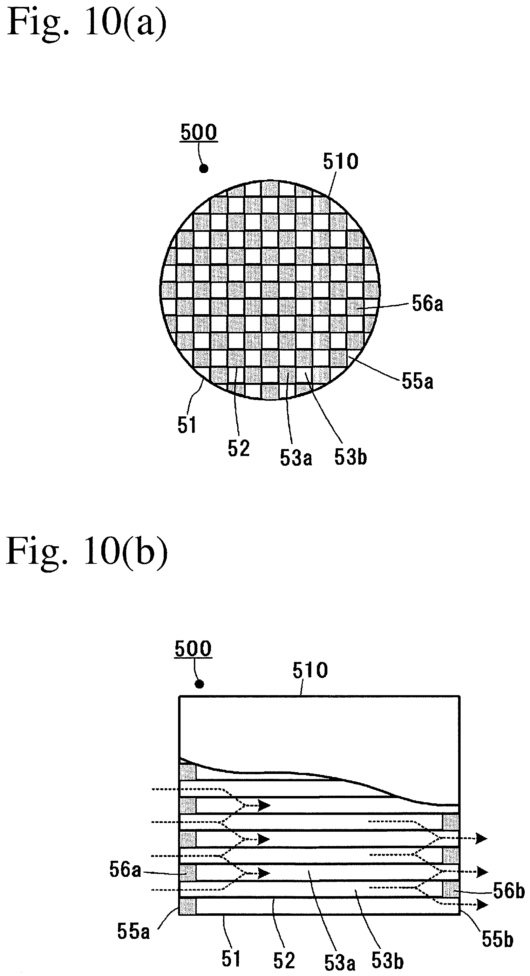

Because NOx and PM contained in exhaust gases of diesel engines are likely to adversely affect humans and environment when discharged into the air, a honeycomb structure carrying a NOx catalyst, and a ceramic honeycomb filter for capturing PM have conventionally been attached to a discharge pipe of the diesel engine. An example of ceramic honeycomb filters for capturing PM in exhaust gases is shown in Figs. 10(a) and 10(b). A ceramic honeycomb filter 500 comprises a ceramic honeycomb structure 510 having porous cell walls 52 defining large numbers of flow paths 53a, 53b and an outer peripheral wall 51, and inlet-side plugs 56a and outlet-side plugs 56b sealing the exhaust-gas-introducing end surface 55a and exhaust-gas-discharging end surface 55b of the flow paths 53a, 53b alternately in a checkerboard pattern. As shown by dotted arrows in Fig. 10(b), an exhaust gas flows into the outlet-plugged flow paths 53b open on the exhaust-gas-introducing end surface 55a, passes through communicating pores on and in the cell walls 52 to flow into adjacent inlet-plugged flow paths 53a, and flows out from the exhaust-gas-discharging end surface 55b. During passing through communicating pores on and in the cell walls 52, PM in the exhaust gas is captured, so that the exhaust gas is cleaned. When the captured PM is accumulated to a predetermined level, it is burned to regenerate the ceramic honeycomb structure. Because the use environment of such ceramic honeycomb structure has become increasingly severe, refractory ceramics such as silicon carbide (SiC) having excellent heat shock resistance have become used as its material.

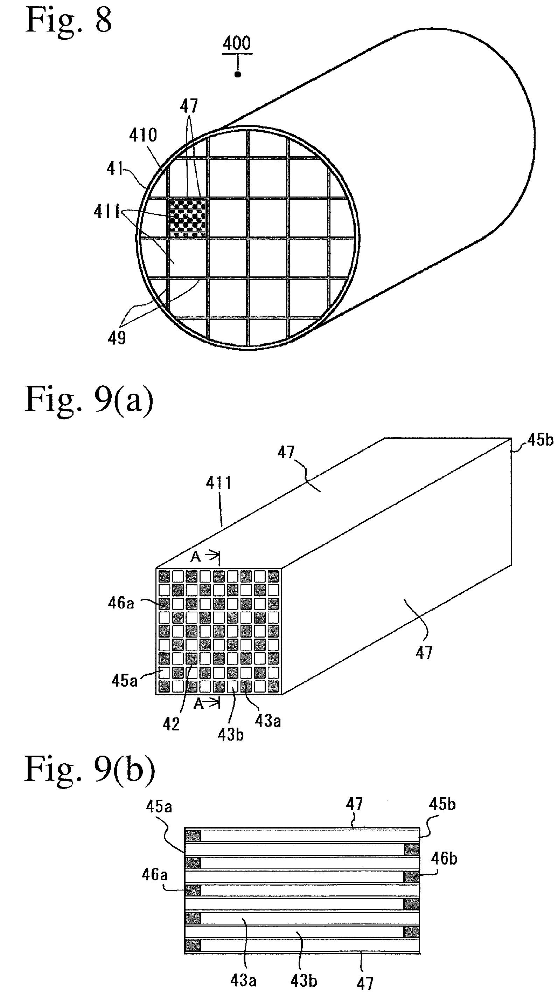

There has been a problem that under thermal shock due to the uneven burning of PM during regeneration, the rapid temperature change of an exhaust gas, etc., an uneven temperature distribution is generated in a ceramic honeycomb structure, so that the ceramic honeycomb structure is subjected to thermal stress, resulting in cracking, breakage, melting, etc. To cope with such problem, proposal has been made to provide a ceramic honeycomb filter 400, in which pluralities of rectangular-cross-sectioned honeycomb segments 411 shown in Fig. 9 are integrally bonded via bonding material layers 49 as shown in Fig. 8, to disperse and alleviate the thermal stress.

As a honeycomb filter undergoing suppressed cracking during regeneration by burning the captured PM, Patent Reference 1 discloses a columnar honeycomb filter, in which pluralities of columnar honeycomb segments are bonded via bonding material layers, each honeycomb segment comprising cell walls forming pluralities of cells extending from one end surface to the other end surface, at least one honeycomb segment being constituted by a center portion and an outer peripheral portion, the thickness of cell walls in the outer peripheral portion being 101-150% of the average thickness of cell walls in the center portion, and the total surface area of cell walls in the outer peripheral portion being 5-35% of the total surface area of cell walls in the honeycomb segment in a cross section perpendicular to the extending direction of cells.

The honeycomb filter of Patent Reference 1 comprises thin cell walls to suppress pressure loss when PM is captured, and to increase the amount of PM accumulated until regeneration starts. However, the honeycomb filter of Patent Reference 1 cannot suppress cracking and melting due to local heat generation, which may be generated by uneven heating during regeneration and irregular combustion depending on the accumulation condition of PM.

Patent Reference 2 discloses a honeycomb structure comprising pluralities of rectangularly columnar honeycomb segments arranged in a lattice pattern, bonding material layers for bonding side surfaces of the honeycomb segments, and an outer peripheral wall surrounding the honeycomb segments, each honeycomb segment comprising porous cell walls defining pluralities of cells longitudinally extending from an inlet end surface to an outlet end surface, and an outer wall enclosing the cell walls, end portions of the cells being sealed by plugs on either inlet or outlet end surface side, one or all of intersections of the lattice-shaped bonding material layers being provided with longitudinally extending bottomed hollow gaps, the ratio of the longitudinal depth of the gaps to the longitudinal length of the honeycomb segment being 5% or more, and the ratio of the opening diameters of the gaps to the thickness of the bonding material layers being 10-140%. Patent Reference 2 describes that this structure can suppress the propagation of cracking generated in the bonding material layers.

When the ratio of the gap depth to the length of the honeycomb segment is as small as 5-20%, all intersections are provided with gaps in Examples of Patent Reference 2, but when the ratio of the gap depth is as large as 50-80%, gaps are formed only in some intersections. Thus, there are no Examples in which all intersections are provided with deep gaps.

Also, the gaps described in Patent Reference 2 have only a circular cross section, and the gaps in Examples are formed by using cylindrical timbers. When cylindrical timbers are placed in the intersections of lattice gaps between the honeycomb segments, the upper limit of the diameter of a cylindrical timber is 2^{1/2} times the thickness of the bonding material layer, substantially 140%. However, because of size tolerance in side surfaces of the honeycomb segments, it is practically impossible to place cylindrical timbers having diameters as large as 2^{1/2} times the thickness of the bonding material layer in the intersections of the lattice gaps, so that the upper limit of the diameters of the cylindrical timbers is inevitably much smaller than 140%. In addition, even though the diameters of the cylindrical timbers are 140% of the thickness of the bonding material layer, gaps formed by the cylindrical timbers have too small cross section areas to suppress cracking sufficiently.

In view of the above structural problem, it has been found that the honeycomb structure of Patent Reference 2 has an insufficient function of dispersing and alleviating thermal stress, failing to suppress cracking sufficiently.

### PRIOR ART REFERENCES

Patent Reference 1: JP 2021-133283 A
Patent Reference 2: JP 2019-171238 A

### OBJECT OF THE INVENTION

Accordingly, an object of the present invention is to provide a silicon carbide honeycomb filter, in which cracking and melting by thermal shock due to local heat generation, the rapid temperature change of an exhaust gas, etc. can be suppressed without increasing pressure loss.

### SUMMARY OF THE INVENTION

As a result of intensive research to achieve the above object, the inventor has found that (1) by the investigated thickness relation between an outer peripheral wall and cell walls in each honeycomb segment constituting a silicon carbide honeycomb filter, cracking and melting, which may occur in the honeycomb filter by thermal shock due to local heat generation, the rapid temperature change of an exhaust gas, etc., can be suppressed without increasing pressure loss, and (2) by the investigated shape of a cross section of each honeycomb segment in a plane perpendicular to the flow path direction, the above effect can be improved by modifying the shape of intersections between the bonded honeycomb segments. The present invention has been completed based on such findings.

A silicon carbide honeycomb filter not according to the claimed invention is constituted by honeycomb segments each comprising cell walls forming cells defining pluralities of flow paths longitudinally extending between both end surfaces, plugs sealing end surfaces of the cells alternately in a checkerboard pattern, and an outer peripheral wall, bonding material layers filling lattice gaps between the honeycomb segments for bonding them, and a skin layer covering the bonded honeycomb segments, the thickness of the outer peripheral wall being more than 1.5 times and 9 times or less that of the cell walls.

The thickness of the cell walls is preferably 0.17-0.31 mm.

The silicon carbide honeycomb filter of the present invention is constituted by honeycomb segments each comprising cell walls forming cells defining pluralities of flow paths longitudinally extending between both end surfaces, plugs sealing end surfaces of the cells alternately in a checkerboard pattern, and an outer peripheral wall, bonding material layers filling lattice gaps between the honeycomb segments for bonding them, and a skin layer covering the bonded honeycomb segments,
a cross section of each honeycomb segment in a plane perpendicular to its flow path direction having a octagonal shape obtained by providing a quadrilateral with a linear chamfer at each corner, which is alternately constituted by first outer peripheral walls corresponding to the sides of the quadrilateral and second outer peripheral walls corresponding to the linear chamfers,
the thickness of the first outer peripheral wall 17a of each honeycomb segment being more than 1.5 times and 9 times or less that of the cell walls,
vacant intersection spaces free of the bonding material being formed in intersections having contours formed by the second outer peripheral walls in lattice gaps between the bonded honeycomb segments, and
a space ratio (t₂/t₁) defined by a ratio of the diameter t₂ of the vacant intersection space to the thickness t₁ of the bonding material layer between the first outer peripheral walls being more than 1.4.

It is preferable that a cross section of each second outer peripheral wall in a plane perpendicular to its flow path direction has a triangular shape formed by two cell walls extending in two perpendicular directions and closest to the second outer peripheral wall and an outer peripheral surface of the second outer peripheral wall, and that the maximum thickness of the second outer peripheral wall defined by the distance between the center vertex of the triangular shape and the outer peripheral surface is larger than the thickness of the first outer peripheral wall.

The above quadrilateral constituting the first outer peripheral walls of the honeycomb segment is preferably a rectangle, and more preferably a square.

The cross section shape of the honeycomb segment is preferably an octagon with a chamfer having an inclination angle of 45° at each corner of a square.

The vacant intersection space preferably has a cross section shape having a contour substantially in contact with four opposing second outer peripheral walls.

The cross section shape of the vacant intersection space is preferably a square, an octagon or a circle.

In a cross section of each honeycomb segment in a plane perpendicular to the flow path direction, the cross section areas of introducing cells whose outlet-side end surfaces are sealed are preferably larger than the cross section areas of discharging cells whose inlet-side end surfaces are sealed.

### EFFECTS OF THE INVENTION

Because the outer peripheral wall thickness is more than 1.5 times and 9 times or less the cell wall thickness in each honeycomb segment in the silicon carbide honeycomb filter of the present invention, cracking and melting can be suppressed without deteriorating pressure loss. Also, by providing a cross section of each honeycomb segment in a plane perpendicular to the flow path direction with an octagonal shape having a chamfer at each corner, and by forming a space at each intersection constituted by the second outer peripheral walls corresponding to the chamfers, the maximum effect of dispersing and alleviating thermal stress can be obtained while maintaining heat conduction between the honeycomb segments.

### BRIEF DESCRIPTION OF THE DRAWINGS

Fig. 1 is a perspective view schematically showing an example of silicon carbide honeycomb filters.
Fig. 2 is a perspective view schematically showing an example of honeycomb segments used in a silicon carbide honeycomb filter.
Fig. 3 is a front view schematically showing another example of honeycomb segments.
Fig. 4(a) is a front view schematically showing a further example of honeycomb segments.
Fig. 4(b) is a front view schematically showing an example of honeycomb segments of the present invention.
Fig. 4(c) is a front view schematically showing a still further example of honeycomb segments of the present invention.
Fig. 4(d) is a partial front view showing in detail the second outer peripheral wall of the honeycomb segment of Fig. 4(b).
Fig. 5 is a perspective view schematically showing another example of the silicon carbide honeycomb filters of the present invention.
Fig. 6(a) is a partial cross-sectional view showing an example of vacant intersection spaces.
Fig. 6(b) is a partial cross-sectional view showing another example of vacant intersection spaces.
Fig. 6(c) is a partial cross-sectional view showing a further example of vacant intersection spaces.
Fig. 7(a) is a front view schematically showing a die for extrusion-molding the honeycomb segment.
Fig. 7(b) is a cross-sectional view taken along the line B-B in Fig. 7(a).
Fig. 7(c) is a partial enlarged view of Fig. 7(b).
Fig. 7(d) is a front view schematically showing a die for extrusion-molding a honeycomb green body, in which the maximum thickness of the second outer peripheral wall is larger than the thickness of the first outer peripheral wall.
Fig. 8 is a perspective view schematically showing a silicon carbide honeycomb filter having a conventional segment-bonded structure.
Fig. 9(a) is a perspective view schematically showing a conventional honeycomb segment.
Fig. 9(b) is a cross-sectional view taken along the line A-A in Fig. 9(a).
Fig. 10(a) is a front view schematically showing an example of conventional silicon carbide honeycomb filters.
Fig. 10(b) is a cross-sectional view showing the silicon carbide honeycomb filter of Fig. 10(a) in parallel to its longitudinal direction.
Fig. 11 is a graph showing temperature control in the drop to idle test.

### DESCRIPTION OF THE PREFERRED EMBODIMENTS

The embodiments of the present invention will be explained below referring to the drawings. The present invention is not restricted to the embodiments described below, but any modifications and improvements may be added unless they are deviated from the scope of the present invention.

### [1] Silicon carbide honeycomb filter

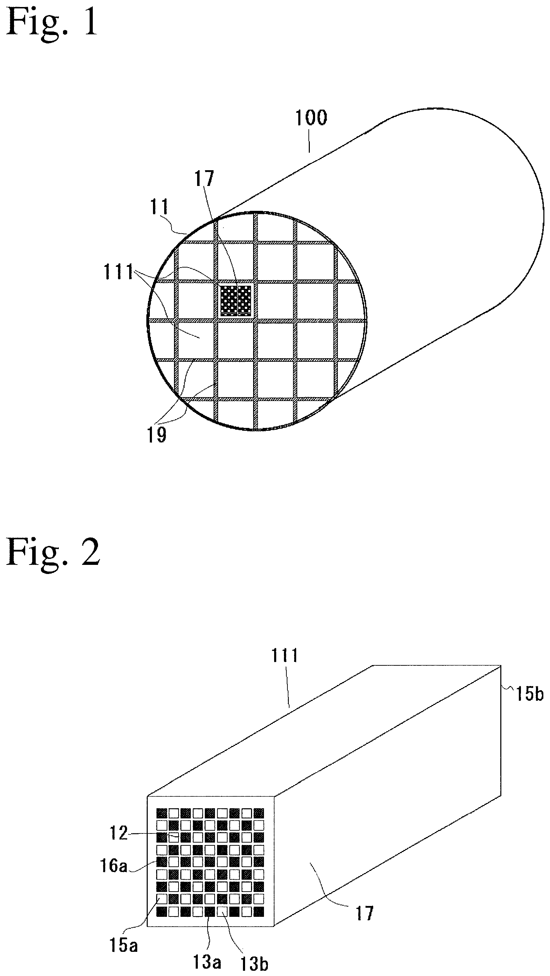

The silicon carbide honeycomb filter 100 shown in Fig. 1 comprises honeycomb segments 111 shown in Fig. 2, and bonding material layers 19 filling lattice gaps between the honeycomb segments 111for bonding them. The honeycomb segment 111 comprises an outer peripheral wall 17, and cell walls 12 forming cells 13a, 13b defining pluralities of flow paths extending longitudinally form one end surface 15a to the other end surface 15b, the inlet-side and outlet-side end surfaces 15a, 15b of the cells 13a, 13b being sealed by plugs 16a, 16b alternately in a checkerboard pattern.

The silicon carbide honeycomb filter 100 of the present invention is characterized in that the thickness of an outer peripheral wall 17 is more than 1.5 times and 9 times or less the thickness of cell walls 12 in the honeycomb segment 111. Because such a thick outer peripheral wall 17 can provide the honeycomb segment 111 with sufficient heat capacity despite thin cell walls 12, cracking and melting can be suppressed even though local temperature elevation occurs by the burning of unevenly accumulated PM during the regeneration of the honeycomb filter 100.

When the thickness of the outer peripheral wall 17 of the honeycomb segment 111 is 1.5 times or less that of the cell wall 12, the honeycomb segment 111 is so insufficient in heat capacity that cracking and melting may occur by thermal shock, etc. in the honeycomb filter. On the other hand, when the thickness of the outer peripheral wall 17 is more than 9 times that of the cell wall 12 in the honeycomb segment 111, the honeycomb filter suffers too large pressure loss. The lower limit of the ratio of the thickness of the outer peripheral wall 17 to that of the cell wall 12 is preferably 1.6 times, and more preferably 1.7 times. Also, the upper limit is preferably 8 times, and more preferably 7 times.

The cell walls 12 of the honeycomb segment 111 preferably have a thickness of 0.17-0.31 mm. When the thickness of the cell wall 12 is less than 0.17 mm, the heated honeycomb segments 111 have too low strength, and the honeycomb filter may be cracked and melted by shock, etc. On the other hand, when the cell walls 12 have a thickness of more than 0.31 mm, the honeycomb filter suffers too large pressure loss.

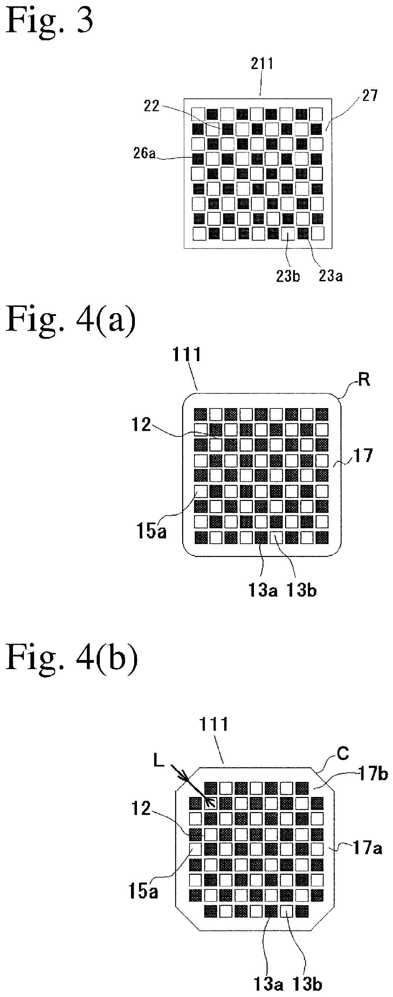

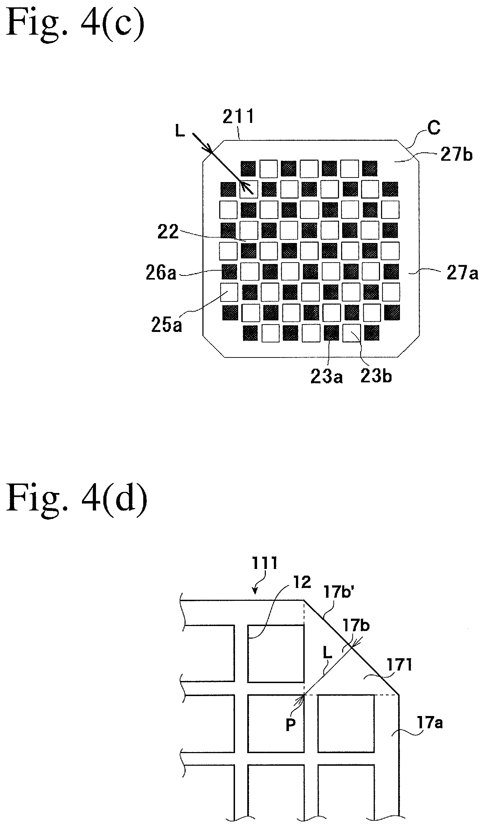

As shown in Figs. 3 and 4(c), in a cross section of the honeycomb segment 211 in a plane perpendicular to the flow path direction of cells, cells (exhaust-gas-introducing cells) 23b whose outlet-side end surfaces are sealed may have larger cross section areas than those of cells (exhaust-gas-discharging cells) 23a whose inlet-side end surfaces are sealed. This can increase the amount of PM accumulated in the honeycomb filter until regeneration starts, and make the honeycomb filter resistant to pressure loss increase when PM is captured. The cross section areas of the introducing cells 23b are preferably 1.1-2.0 times, and more preferably 1.2-1.9 times, those of the discharging cells 23a.

The contour of the honeycomb segment in a cross section in a plane perpendicular to the flow path direction is generally a quadrilateral, preferably a rectangle having all corner angles of 90°, and more preferably a square having all corner angles of 90° and all equal-length sides. Also, a quadrilateral in form of a square having linear chamfers C as shown in Figs. 4(b) and 4(c) may be used.

The silicon carbide honeycomb filter 200 of the present invention is characterized in that
(a) a cross section of each honeycomb segment 111 in a plane perpendicular to the flow path direction has an octagonal shape having a linear chamfer C at each corner, which is alternately constituted by first outer peripheral walls 17a corresponding to the sides of the quadrilateral and second outer peripheral walls 17b corresponding to the linear chamfers C,
(b) the thickness of the first outer peripheral wall 17a of the honeycomb segment 111 is more than 1.5 times and 9 times or less that of the cell wall 12,
(c) intersections defined by the second outer peripheral walls 17b in lattice gaps between the bonded honeycomb segments 111 are provided with vacant intersection spaces 20 free of the bonding material, and
(d) a space ratio (t₂/t₁), which is defined by a ratio of the space diameter t₂ of the vacant intersection space 20 to the thickness t₁ of the bonding material layer 19 between the first outer peripheral walls 17a, is more than 1.4.

When sufficiently large spaces are formed in the intersections of lattice gaps between the honeycomb segments, the cross section shape of the honeycomb segment is preferably an octagon having a chamfer having an inclination angle of 45° at each corner as shown in Fig. 4(b). In the example shown in Fig. 4(b), the honeycomb segment 111 has an octagonal outer wall constituted by a square having a linear chamfer C having the inclination of 45° at each corner, the octagonal outer wall being constituted by long first outer peripheral walls 17a corresponding to the sides of the square and short second outer peripheral walls 17b corresponding to the linear chamfers C.

The honeycomb segment having a chamfer at each corner preferably does not have flow paths in the second outer peripheral walls located at corners. For example, the honeycomb segment 111 shown in Fig. 4(b) does not have flow paths at corners having the second outer peripheral walls 17b, and each second outer peripheral wall 17b preferably has a triangular shape 171 having a vertex P on the center side of the honeycomb segment 111 as shown in Fig. 4(d). In this case, the maximum radial thickness L of each second outer peripheral wall 17b (distance between the outer peripheral surface 17b' of the second outer peripheral wall 17b and the vertex P) is larger than the thickness of the first outer peripheral wall 17a. Particularly when the honeycomb segment 111 has an octagonal shape having a linear chamfer having the inclination of 45° at each corner, the triangular shape 171 is an isosceles right triangle having the outer peripheral surface 17b' as a base, the maximum thickness L being a half of the length of the outer peripheral surface 17b' of the second outer peripheral wall 17b. Such a shape provides the honeycomb segment 111 with large heat capacity, so that cracking can be suppressed even when local temperature elevation occurs in the honeycomb segment 111 by the burning of unevenly accumulated PM.

When pluralities of honeycomb segments 111 having such octagonal outer walls are bonded in two perpendicular directions, lattice gaps are formed between the honeycomb segments 111, and intersections are formed by four opposing second outer peripheral walls 17b. Because this is true in a case where the honeycomb segments 211 shown in Fig. 4(c) are bonded, the following explanations will be made on a case where the honeycomb segments 111 are bonded. It should be noted that such explanations are applicable to a case where the honeycomb segments 211 are bonded.

Because adjacent second outer peripheral walls 27b are separate from each other by the width of the lattice gap, the intersections may have various cross section shapes in other portions than the contours of the second outer peripheral walls 27b. Because the cross section shapes of spaces formed in the intersections are determined by the cross section shapes of rod spacers placed in the intersections as described later, there is no need of defining the contours of the intersections for forming the vacant spaces up to portions facing the lattice gaps. Thus, the contours of the intersections are simply defined as "shapes having sides formed by four opposing second outer peripheral walls 27b."

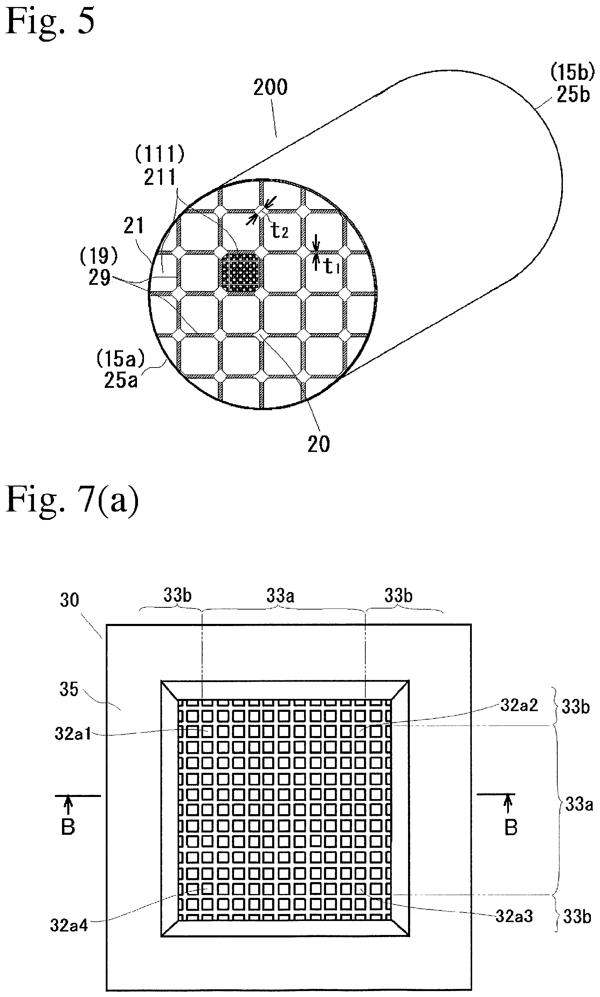

When a honeycomb filter 200 is formed by bonding honeycomb segments 111 as shown in Fig. 5, vacant intersection spaces 20 free of the bonding material are preferably formed in the intersections defined by four second outer peripheral walls 17b. As described above, the cross section shapes of the vacant intersection spaces 20 are determined by the cross section shapes of rod spacers receivable in the intersections having contours formed by the second outer peripheral walls 17b. For example, when the rod spacers have square or circular cross section shapes in contact with the second outer peripheral walls 17b, the cross section shapes of the resultant vacant intersection spaces 20 are square or circular. In any case, each vacant intersection space 20 preferably extends longitudinally from one end surface 15a to the other end surface 15b. With the vacant intersection spaces 20, thermal stress is dispersed and alleviated without deteriorating heat conduction between adjacent honeycomb segments 111, so that cracking and melting can be suppressed even if there is local heat generation due to the burning of unevenly accumulated PM.

Though a rod spacer is in contact with two second outer peripheral walls 17b positioned below during production, it need not be in contact with two upper second outer peripheral walls 17b. However, to maximize the cross section area of a vacant intersection space 20 for sufficiently suppressing cracking, the contour of the vacant intersection space 20 is preferably in contact with all second outer peripheral walls 17b. However, because tolerance-level gaps are acceptable, it is described herein that "the contours of the vacant intersection spaces 20 are preferably almost in contact with the second outer peripheral walls 17b."

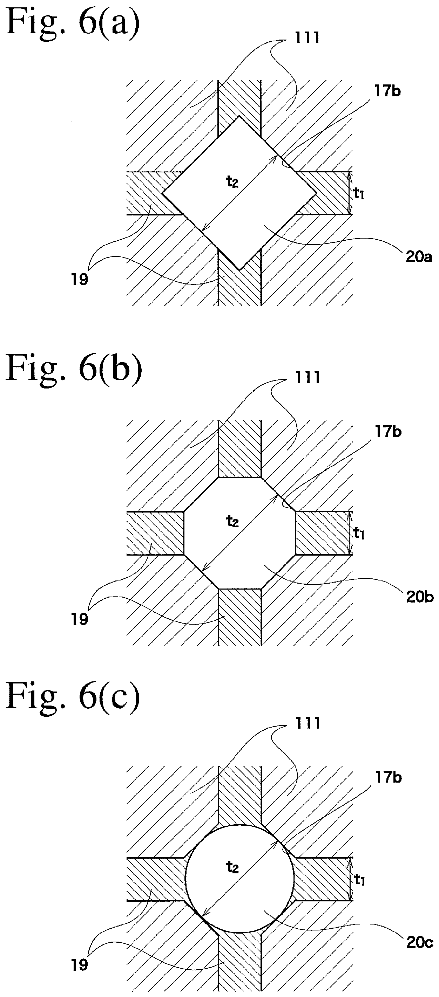

Figs. 6(a), 6(b) and 6(c) show a vacant intersection space 20a having a square cross section, a vacant intersection space 20b having an octagonal cross section, and a vacant intersection space 20c having a circular cross section, respectively.

The vacant intersection space 20a having a square cross section shown in Fig. 6(a) has the largest cross section area of t₂², among the above three types of vacant intersection spaces 20a, 20b, 20c, because all sides in contact with the second outer peripheral walls 17b are connected in the bonding material layers 19. The ratio (space ratio t₂/t₁) of the distance (pore diameter) t₂ between two opposing second outer peripheral walls 17b to the thickness t₁ of the bonding material layer 19 is preferably more than 1.4. When the space ratio t₂/t₁ is 1.4 or less, the sufficient effect of suppressing the propagation of cracking is not obtained. The space ratio t₂/t₁ is preferably 1.5 or more, and more preferably 2 or more. On the other hand, too large a space ratio t₂/t₁ undesirably deteriorates the strength of the honeycomb filter. The space ratio t₂/t₁ is preferably 7 or less, more preferably 5 or less, and most preferably 4 or less. Accordingly, the range of the space ratio t₂/t₁ in the vacant intersection space 20a having a square cross section is generally more than 1.4 and 7 or less, preferably 1.5-5, and more preferably 2-4. Because the space ratio t₂/t₁ is more than 1.4, the cross section area of the vacant intersection space 20a is more than 1.4 t₁ x 1.4 t₁ (= 1.96 t₁²).

The vacant intersection space 20b having an octagonal cross section shown in Fig. 6(b) is constituted by four sides each having a length in contact with the second outer peripheral wall 17b and sides each extending in the width direction of the bonding material layer 19, having a cross section area of (t₂² - t₁²). It is clear from this formula of the cross section area that unless t₂ is sufficiently larger than t₁, the vacant intersection space 20b does not have a sufficient cross section area. Accordingly, the space ratio t₂/t₁ is preferably 1.7 or more, more preferably 2 or more, and most preferably 2.5 or more. Also, the upper limit of the space ratio t₂/t₁ is preferably 7, more preferably 5, and most preferably 4, like in the case of a square cross section. Accordingly, the range of the space ratio t₂/t₁ in the vacant intersection space 20b having an octagonal cross section is preferably 1.7-7, more preferably 2-5, and most preferably 2.5-4. With the space ratio t₂/t₁ in the above range, the vacant intersection space 20b having an octagonal cross section has a sufficiently large cross section area with substantially no intrusion into the bonding material layers 19, thereby achieving both a sufficient cracking-suppressing cross section area and enough bonding strength.

The vacant intersection space 20c having a circular cross section shown in Fig. 6(c) has a cross section area of (π/4)t₂², because it has a diameter in contact with the second outer peripheral walls 17b. In order that the vacant intersection space 20c has a sufficient cross section area, the space ratio t₂/t₁ is preferably 1.5 or more, more preferably 2 or more, and most preferably 2.5 or more. Similarly to the square cross section, the upper limit of the space ratio t₂/t₁ is preferably 7, more preferably 5, and most preferably 4. Accordingly, the range of the space ratio t₂/t₁ in the vacant intersection space 20c having a circular cross section is preferably 1.5-7, more preferably 2-5, and most preferably 2.5-4. With the space ratio t₂/t₁ in the above range, the vacant intersection space 20c having a circular cross section has a sufficiently large cross section area with substantially no intrusion into the bonding material layers 19, surely having sufficient cross section area and bonding strength for suppressing cracking.

In sum, the range of the space ratio t₂/t₁ in all vacant intersection spaces having the above cross section shapes is generally more than 1.4 and 7 or less, preferably 1.5-5, and more preferably 2-4.

To suppress cracking in whichever portion of each honeycomb segment 111 local temperature elevation due to the burning of unevenly accumulated PM occurs, the percentage of the vacant intersection spaces 20 to all intersections in each honeycomb segment 111 is preferably 30% or more, more preferably 50% or more, and most preferably 70% or more. The upper limit of the percentage of the vacant intersection spaces 20 is preferably 100% of all intersections, though it may be 95% or less.

### [2] Production method of silicon carbide honeycomb filter

### (1) Production of honeycomb segments

100% by mass of a molding material comprising silicon carbide particles, alumina particles and magnesium hydroxide particles is mixed with 5-15% by mass of an organic binder. The silicon carbide particles preferably have an average particle size of 30-50 µm. The total amount of alumina particles and magnesium hydroxide particles per 100% by mass of silicon carbide particles is preferably 8-15% by mass.

The organic binder may be methylcellulose, ethylcellulose, ethylmethylcellulose, carboxymethylcellulose, hydroxymethylcellulose, hydroxypropyl methylcellulose, hydroxyethylcellulose, hydroxyethyl ethylcellulose, etc. Among them, methylcellulose or hydroxypropyl methylcellulose is preferable.

The resultant mixture is blended with water to form a plasticizable moldable material. In order that the moldable material has moldable hardness, the amount of water added is preferably 20-50% by mass per 100% by mass of the molding material.

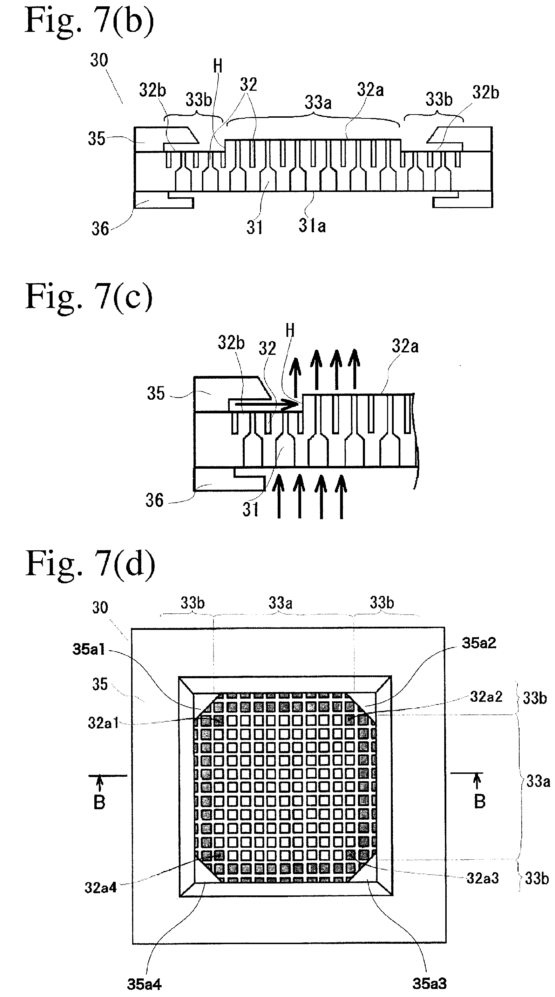

The moldable material is extrusion-molded by a die 30 shown in Figs. 7(a) and 7(b). The die 30 comprises a first surface 31a, a second surface 32a opposing the first surface 31a, a third surface 32b located outside the second surface 32a on the opposite side of the first surface 31a, moldable-material-supplying holes 31 open on the first surface 31a, and rectangular-cross-sectioned slits 32 communicating with the moldable-material-supplying holes 31 and open on the second and third surfaces 32a, 32b in a lattice pattern. The slits 32 are connected in a lattice pattern in the die body. The second surface 32a constitutes a region 33a for forming the lattice-shaped cell walls of a honeycomb green body, and the third surface 32b located outside the cell-wall-forming region 33a constitutes a region 33b for forming the outer peripheral wall. The second surface 32a is higher than the third surface 32b by a step H. A guide ring 35 having an opening for defining the outer peripheral surface shape of the honeycomb green body is arranged on the third surface 32b, such that it surrounds the cell-wall-forming region 33a. The opening of the guide ring 35 has a size of defining the outer periphery of the outer peripheral surface region 33b. A mask 36 for controlling the flow of the moldable material is arranged on the first surface 31a.

As shown by arrows in Fig. 7(c), a moldable material discharged from the slits 32 open on the third surface 32b in the outer peripheral surface region 33b changes its flow direction to the cell-wall-forming region 33a by the guide ring 35, and then to the extrusion direction by the step H. Thus, cell walls extruded from the second surface 32a receive less power of the moldable material flowing from the outer peripheral surface region 33b, so that they are not deformed, providing a honeycomb green body having a thick outer peripheral wall. The thickness of the outer peripheral wall can be adjusted by changing the distance between the inner end of the guide ring 35 and the step H, and the position of the inner end of the mask 36.

A honeycomb green body in which the maximum thickness L of the second outer peripheral wall 17b is larger than the thickness of the first outer peripheral wall 17a can be formed by using a die shown in Fig. 7(d), for example. This die is the same as the die shown in Fig. 7(a), except that four corner portions 32a1, 32a2, 32a3, 32a4 of the second surface 32a are the same in height as the outer peripheral surface region 33b, and that the guide ring 35 has triangular closure portions 35a1, 35a2, 35a3, 35a4 in four corners of its opening. In Fig. 7(d), regions (outer peripheral surface regions 33b and four corner portions 32a1, 32a2, 32a3, 32a4) lower than the cell-wall-forming region 33a by the step H are hatched.

The resultant honeycomb green body is dried, and then machined in end surfaces, an outer peripheral surface, etc., if necessary. It is then sintered at a temperature of 1100-1350°C in an oxidizing atmosphere to obtain a silicon carbide honeycomb segment. Though not particularly restrictive, the drying method may be, for example, hot-air drying, microwave-heating drying, highfrequency-heating drying, etc.

### (2) Production of honeycomb filter

A material (bonding material) for bonding the honeycomb segments comprises a bonding material comprising silicon carbide aggregate particles and binder particles, an organic binder, and if necessary, an inorganic binder and a pore-forming material. The binder particles may be made of at least one selected from the group consisting of aluminum sources, magnesium sources, silica sources and these compounds. The alumina sources may be alumina or aluminum hydroxide, and the magnesium sources may be magnesium oxide or magnesium hydroxide. The total amount of alumina source particles and magnesium source particles is preferably 5-25% by mass per 100% by mass of silicon carbide particles.

The organic binders may be the same as used for the production of the honeycomb segments. The amount of the organic binder added is preferably 5-15% by mass per 100% by mass of the bonding material.

The inorganic binders may be colloidal silica, colloidal alumina, etc. The amount of the inorganic binder added is preferably 40% or less by mass per 100% by mass of the bonding material.

The pore-forming material may be foamable resins, foamed resins, carbon, water-absorbing resins, fly ash balloon, etc. Among them, foamable resins or foamed resins having small particle diameter unevenness are preferable. The amount of the pore-forming material added is preferably 2-20% by mass per 100% by mass of the bonding material.

The resultant mixture is blended with water to form a bonding material slurry. The amount of water added is preferably 20-50% by mass per 100% by mass of the bonding material.

After the bonding material slurry is applied to the outer peripheral walls 17 of the honeycomb segments 111, as shown in Fig. 1, the honeycomb segments 111 are pressed to each other via the bonding material to bond them. Thus, the bonding material layers 19 are formed in a lattice pattern between the honeycomb segments 111.

In the production of the honeycomb filter 200 having vacant intersection spaces 20 as shown in Fig. 5, a rod spacer having the same size as each intersection constituted by four second outer peripheral walls 27b and the same length as that of the honeycomb segment 111 is placed in the intersection, to prevent the bonding material from intruding into the intersection when the honeycomb segments 111 are bonded. The rod spacer is preferably formed by easily burnable wood, paper, resins, etc.. The rod spacer preferably has a length extending between both end surfaces 25a, 25b.

After drying the bonding material layers 19 between the honeycomb segments 111, sintering is conducted at a temperature of 1100-1350°C in an oxidizing atmosphere, thereby burning off the rod spacers to form a sintered body (honeycomb-filter-forming body) having vacant intersection spaces 20.

The outer peripheral surface of the sintered body is machined to a circular shape by a lathe, and the resultant circular outer peripheral surface is coated with a skin layer material comprising silicon carbide particles and an inorganic binder to form a skin layer 11, which is dried to obtain a silicon carbide honeycomb filter 200.

The present invention will be explained in further detail referring to Examples below, without intention of restricting the present invention thereto..

### Example 1 (not representing the invention)

A molding material comprising 100% by mass of silicon carbide particles, 5.9% by mass of alumina particles and 4.1% by mass of magnesium hydroxide particles was mixed with 10% by mass of hydroxypropyl methylcellulose as an organic binder, and the resultant mixture was blended with water in an amount of 35% by mass per 100% by mass of the molding material. The resultant plasticizable moldable material was extruded through a die of a screw-molding machine to form a honeycomb segment green body having a square cross section as shown in Fig. 2, which was dried at 120°C for 2 hours by a hot-air dryer. Thereafter, the end surfaces 15a, 15b of the cells 13 of the honeycomb segment green body were sealed alternately in a checkerboard pattern with a plugging material having the same composition as that of the moldable material, and the plugging material was dried to form inlet-side plugs 16a and outlet-side plugs (not shown).

A bonding material slurry was prepared by blending 100% by mass of silicon carbide particles with 5.9% by mass of alumina particles, 4.1% by mass of magnesium hydroxide particles, 4.0% by mass of a foamed resin as a pore-forming material, 8.0% by mass of colloidal silica, 10% by mass of hydroxypropyl methylcellulose as an organic binder, and 30% by mass of water. With this bonding material slurry applied to the outer peripheral walls 17 of the honeycomb segment green bodies, 6 x 6 honeycomb segments green bodies were pressed to each other for bonding as shown in Fig. 1.

After drying the bonding material, sintering was conducted at a temperature of 1300°C in an oxidizing atmosphere, and the outer peripheral surface of the resultant sintered body was machined to a circular shape by a lathe. A skin layer material comprising silicon carbide particles and colloidal silica was applied to the circular outer peripheral surface, and dried to obtain a silicon carbide honeycomb filter 100 having an outer diameter of 190 mm and an entire length of 203 mm. Each honeycomb segment 111 constituting the honeycomb filter 100 had a square cross section of 35 mm in each side, the outer peripheral wall 17 being as thick as 0.7 mm, the cell walls being as thick as 8 mil (0.20 mm), and the cell density being 300 cpsi (46.5 cells/cm²). The bonding material layers 19 between the honeycomb segments 111 were as thick as 2 mm.

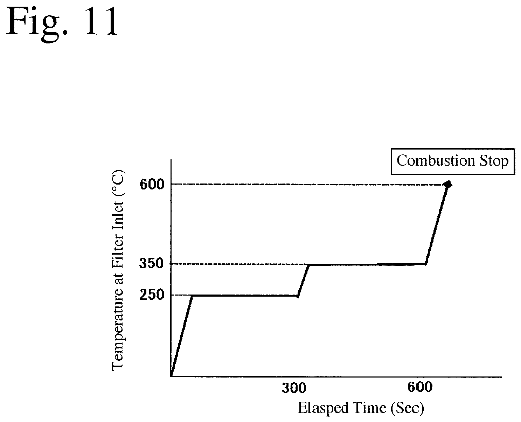

Using this silicon carbide honeycomb filter, a drop-to-idle test comprising the following steps was conducted. First, combustion soot having an average particle diameter of 0.11 µm was supplied at a rate of 1.57 g/h to the silicon carbide honeycomb filter fixed to a test stand with air at a flow rate of 4.5 Nm³/min, such that the amount of deposited soot reached 6 g per 1 liter of the filter. To follow a drop-to-idle state in which a vehicle quickly stopped at a top of an upward slope, a combustion gas was caused to flow through the honeycomb filter with the temperature control shown in Fig. 11. When the temperature at the honeycomb filter inlet became 600°C, combustion was stopped to have the highest temperature inside the filter. Thereafter, the honeycomb filter was detached to examine whether or not damage occurred in the honeycomb filter. As a result, it was confirmed that no cracking and melting occurred in the silicon carbide honeycomb filter of Example 1.

### Example 2 (not representing the invention)

A moldable material prepared in the same manner as in Example 1 was extruded through a die of a screw-molding machine, to form a honeycomb segment green body with introducing cells having larger cross section areas than those of discharging cells as shown in Fig. 3. After drying the honeycomb segment green body at 120°C for 2 hours by a hot-air dryer, a plugging material having the same composition as that of the moldable material was charged into the end portions of cells 23a, 23b alternately in a checkerboard pattern, and dried to form inlet-side plugs 26a and outlet-side plugs (not shown).

A bonding material slurry prepared in the same manner as in Example 1 was applied to the outer peripheral wall of the honeycomb segment green body, and 6 x 6 honeycomb segments green bodies were pressed to each other for bonding. After drying the bonding material, sintering was conducted at a temperature of 1300°C in an oxidizing atmosphere, and the outer peripheral surface of the resultant sintered body was machined to a circular shape by a lathe. A skin layer material comprising silicon carbide particles and colloidal silica was applied to the resultant circular outer peripheral surface, and dried to obtain a silicon carbide honeycomb filter having an outer diameter of 190 mm and an entire length of 203 mm. Each honeycomb segment 211 constituting the honeycomb filter had a square cross section of 35 mm in each side, having an outer peripheral wall 17 as thick as 1.3 mm, cell walls as thick as 8 mil (0.20 mm), and a cell density of 300 cpsi (46.5 cells/cm²), and the cross section area of the introducing cell 23b being 1.58 times that of the discharging cell 23a. The bonding material layers between the honeycomb segments 211 were as thick as 2 mm.

By the same drop-to-idle test as in Example 1, it was confirmed that the highest temperature that the silicon carbide honeycomb filter of Example 2 reached was lower than that of Example 1, and that no cracking and melting occurred.

### Example 3 (representing the invention)

A moldable material prepared in the same manner as in Example 1 was extruded through a die of a screw-molding machine, and dried at 120°C for 2 hours by a hot-air dryer, to form a honeycomb segment green body having an octagonal cross section with a linear chamfer having an inclination angle of 45° at each corner of a square as shown in Fig. 4(c), the cross section areas of introducing cells being larger than those of discharging cells. The outer peripheral surface of the honeycomb segment green body was constituted by first outer peripheral walls 27a corresponding to the sides of the quadrilateral and second outer peripheral walls 27b corresponding to the linear chamfers.

The end surfaces of cells 23a, 23b of the honeycomb segment green body were sealed alternately in a checkerboard pattern by a plugging material having the same composition as that of the moldable material, and the plugging material was dried. Sintering was then conducted at a temperature of 1300°C in an oxidizing atmosphere to obtain a honeycomb segment 211 having inlet-side plugs 26a and outlet-side plugs 26b.

Wood rod spacers each having a square cross section and the same length as the entire length of the honeycomb segment 211 was placed in advance in intersections, which were constituted by the second outer peripheral walls 27b when the honeycomb segments 211 were assembled via lattice gaps. The length of one side of a square cross section of each rod spacer was 2^{1/2} times [the length of the second outer peripheral wall 47b + the thickness t₁ of the lattice gap (bonding material layer)].

A bonding material slurry prepared in the same manner as in Example 1 was applied to portions of the outer peripheral walls of the honeycomb segments 211, which were not covered with the rod spacers, and 6 x 6 honeycomb segments 211 were press-bonded to each other via a bonding material slurry. After drying the bonding material layers formed between the honeycomb segments 211, sintering was conducted at a temperature of 1300°C in an oxidizing atmosphere, thereby burning off the wood rod spacers, to form vacant intersection spaces 20 each having a square cross section as shown in Fig. 5 and extending longitudinally between both end surfaces 25a, 25b. The vacant intersection space 20 had a space diameter t₂ of 7 mm.

The vacant intersection spaces 20 were filled with a plugging material to the depth of 1 mm on the side of one end surface 25a, and the outer peripheral surface of the honeycomb filter was machined to a circular shape by a lathe. A skin layer material comprising silicon carbide particles and colloidal silica was applied to the resultant circular outer peripheral surface, and dried to obtain a silicon carbide honeycomb filter 200 having an outer diameter of 190 mm and an entire length of 203 mm. Each honeycomb segment 211 constituting the silicon carbide honeycomb filter 200 had an octagonal cross section with a linear chamfer having an inclination angle of 45° at each corner of a square of 35mm in one side, the first outer peripheral walls 27a being as long as 30 mm, the second outer peripheral walls 27b being as long as 4 mm, the thickness of the first outer peripheral wall being 1.3 mm, the maximum thickness L of the second outer peripheral wall being 2 mm, the thickness of the cell wall 22 being 8 mil (0.20 mm), the cell density being 300 cpsi (46.5 cells/cm²), and the cross section areas of introducing cells 33b being 1.58 times those of discharging cells 33b. The thickness of the bonding material layer was 2 mm.

By the same drop-to-idle test as in Example 1, it was confirmed that the highest temperature that the silicon carbide honeycomb filter of Example 3 reached was lower than that of Example 2, and that no cracking and melting occurred.

### Comparative Example 1

A moldable material prepared in the same manner as in Example 1 was extruded through a die of a screw-molding machine to form a honeycomb segment green body having the shape shown in Figs. 9(a) and 9(b), and the honeycomb segment green body was dried at 120°C for 2 hours by a hot-air dryer.

The end surfaces 45a, 45b of cells 43 of the honeycomb segment 411 were sealed alternately in a checkerboard pattern by a plugging material having the same composition as that of the moldable material, which was then dried. Thereafter, sintering was conducted at a temperature of 1300°C in an oxidizing atmosphere to obtain a honeycomb segment 411 having inlet-side plugs 46a and outlet-side plugs 46b.

A bonding material slurry prepared in the same manner as in Example 1 was applied to the outer peripheral walls 47 of the honeycomb segments 411, and 6 x 6 honeycomb segments 411 were press-bonded to each other via a bonding material as shown in Fig. 8. After drying the resultant honeycomb filter, sintering was conducted at a temperature of 1300°C in an oxidizing atmosphere, and the outer peripheral surface was machined to a circular shape by a lathe.

A skin layer material comprising silicon carbide particles and colloidal silica was applied to the circular outer peripheral surface of the honeycomb filter, and dried to obtain a silicon carbide honeycomb filter 400 having an outer diameter of 190 mm and an entire length of 203 mm. Each honeycomb segment 411 constituting the honeycomb filter 400 had a square cross section of 35 mm in each side, the thickness of the outer peripheral wall being 0.2 mm, the thickness of cell walls 42 being 8 mil (0.20 mm), and the cell density being 300 cpsi (46.5 cells/cm²). Also, the bonding material layers 49 were as thick as 2 mm.

By the same drop-to-idle test as in Example 1, it was confirmed that the silicon carbide honeycomb filter of Comparative Example 1 reached the highest temperature that was higher than in Example 1, with cracking and melting.

### DESCRIPTION OF REFERENCE NUMERALS

100, 200, 400: Silicon carbide honeycomb filter
111, 211, 411: Honeycomb segment
11, 21, 41, 51: Skin layer
12, 22, 42, 52: Cell wall
13a, 23a, 43a, 53a: Inlet-plugged flow path (discharging cell)
13b, 23b, 43b, 53b: Outlet-plugged flow path (introducing cell)
15a, 25a, 45a, 55a: One end surface (inlet-side end surface)
15b, 25b, 45b, 55b: Another end surface (outlet-side end surface)
16a, 26a, 46a, 56a: Inlet-side plug
46b, 56b: Outlet-side plug
17, 27, 47: Outer peripheral wall
17a, 27a: First outer peripheral wall
17b, 27b: Second outer peripheral wall
19, 29, 49: Bonding material layer
20, 20a, 20b, 20c: Vacant intersection space
30: Extrusion-molding die
31: Supply hole
31a: First surface
32: Slit
32a: Second surface
32b: Third surface
32a1, 32a2, 32a3, 32a4: Corner portion of second surface
33a: Cell-wall-forming region
33b: Outer peripheral region
35: Guide ring
35a1, 35a2, 35a3, 35a4: Closure portion
36: Mask
H: Step
L: Maximum thickness of second outer peripheral wall
t₁: Thickness of bonding material layer between first outer peripheral walls
t₂: Space diameter of vacant intersection space

## Claims

1. A silicon carbide honeycomb filter (200) comprising honeycomb segments (111) each having cell walls (12) forming cells defining pluralities of flow paths (13a, 13b) longitudinally extending between both end surfaces (15a, 15b), plugs (16a, 16b) sealing end surfaces (15a, 15b) of said cells alternately in a checkerboard pattern, and an outer peripheral wall (17), bonding material layers (19) filling lattice gaps between said honeycomb segments (111) for bonding them, and a skin layer (11) covering the bonded honeycomb segments (111),
a cross section shape of each honeycomb segment (111) in a plane perpendicular to its flow path direction being an octagon having a linear chamfer (C) at each corner of a quadrilateral, octagon being constituted alternately by first outer peripheral walls (17a) corresponding to the sides of said quadrilateral and second outer peripheral walls (17b) corresponding to said linear chamfers (C),
vacant intersection spaces (20) free of the bonding material being formed in intersections having contours formed by the second outer peripheral walls (17b) in lattice gaps between the bonded honeycomb segments (111),
a space ratio (t₂/t₁) defined by a ratio of the diameter t₂ of said vacant intersection space (20) to the thickness t₁ of said bonding material layer (19) between said first outer peripheral walls (17a) being more than 1.4, and
the thickness of the first outer peripheral wall (17a) being more than 1.5 times and 9 times or less that of the cell wall (12) in each honeycomb segment (111).

2. The silicon carbide honeycomb filter (200) according to claim 1, wherein said quadrilateral constituting said first outer peripheral walls (17a) of said honeycomb segments (111) is a square.

3. The silicon carbide honeycomb filter (200) according to claim 2, wherein the cross section shape of said honeycomb segment (111) is an octagon obtained by forming a chamfer (C) having an inclination angle of 45° at each corner of a square.

4. The silicon carbide honeycomb filter (200) according to any one of claims 1 to 3, wherein said vacant intersection space (20) has a cross section shape whose contour is substantially in contact with four opposing second outer peripheral walls (17b).

5. The silicon carbide honeycomb filter (200) according to any one of claims 1 to 4, wherein said vacant intersection space (20) has a square, octagonal or circular cross section shape.

6. The silicon carbide honeycomb filter (200) according to any one of claims 1 to 5, wherein a cross section of said second outer peripheral wall (17b) in a plane perpendicular to its flow path direction has a triangular shape formed by two cell walls extending in two perpendicular directions and closest to said second outer peripheral wall (17b) and an outer peripheral surface (17b') of said second outer peripheral wall (17b), and the maximum thickness (L) of said second outer peripheral wall (17b), which is defined by the distance between the center vertex (P) of said triangular shape and said outer peripheral surface (17b'), is larger than the thickness of said first outer peripheral wall (17a).

7. The silicon carbide honeycomb filter (200) according to any one of claims 1 to 6, wherein the inclination angle of said linear chamfer to a side of said quadrilateral is 45°.

8. The silicon carbide honeycomb filter (200) according to any one of claims 1 to 7, wherein the thickness of each cell wall (12) is 0.17-0.31 mm.

9. The silicon carbide honeycomb filter (200) according to any one of claims 1 to 8, wherein in a cross section of said honeycomb segment (211) in a plane perpendicular to the flow path direction, the cross section areas of introducing cells (23b) whose outlet-side end surfaces are sealed are larger than those of discharging cells whose inlet-side end surfaces are sealed.

## Patentansprüche

1. Siliciumcarbid-Wabenfilter (200) mit Wabensegmenten (111), die jeweils Zellwände (12) aufweisen, die Zellen bilden, die mehrere Strömungspfade (13a, 13b) begrenzen, die sich longitudinal zwischen beiden Endoberflächen (15a, 15b) erstrecken, wobei Stopfen (16a, 16b) die Endoberflächen (15a, 15b) der Zellen abwechselnd nach Art eines Schachbrettmusters abdichten, und einer Außenumfangswand (17), wobei Bondingmaterial-Schichten (19) Gitterspalten zwischen den Wabensegmenten (111) ausfüllen, um sie zu bonden, und einer Hautschicht (11), die die gebondeten Wabensegmente (111) abdeckt, wobei
eine Querschnittsgestalt jedes Wabensegments (111) in einer Ebene senkrecht zu seiner Strömungspfad-Richtung ein Achteck mit einer linearen Abfasung (C) an jeder Ecke eines Vierecks ist, wobei das Achteck durch abwechselnde erste Außenumfangswände (17a) gebildet ist, die den Seiten des Vierecks entsprechen, und zweiten Außenumfangswände (17b), die den linearen Abfasungen (C) entsprechen,
leere, von Bondingmaterial freie Zwischenräume (20) an Zwischenstellen mit Konturen gebildet sind, die von den zweiten Außenumfangswänden (17b) in Gitterspalten zwischen den gebondeten Wabensegmenten (111) gebildet sind,
ein durch das Verhältnis eines Durchmessers t₂ des leeren Zwischenraums (20) zur Dicke t₁ der Bondingmaterial-Schicht (19) zwischen den ersten Außenumfangswänden (17a) definiertes Raumverhältnis (t₂/t₁) mehr als 1,4 beträgt, und
die Dicke der ersten Außenumfangswand (17a) mehr als das 1,5-fache und das 9-fache oder weniger derjenigen der Zellwände (12) in jedem Wabensegment (111) beträgt.

2. Siliciumcarbid-Wabenfilter (200) gemäß Anspruch 1, wobei das die ersten Außenumfangswände (17a) der Wabensegmente (111) darstellende Viereck ein Quadrat ist.

3. Siliciumcarbid-Wabenfilter (200) gemäß Anspruch 2, wobei die Querschnittsgestalt des Wabensegments (111) ein Achteck ist, erhalten durch Bilden einer Abfasung (C) mit einem Neigungswinkel von 45° an jeder Ecke eines Quadrats.

4. Siliciumcarbid-Wabenfilter (200) gemäß einem der Ansprüche 1 bis 3, wobei der leere Zwischenraum (20) eine Querschnittsgestalt aufweist, deren Kontur im Wesentlichen in Kontakt mit vier gegenüberliegenden zweiten Außenumfangswänden (17b) ist.

5. Siliciumcarbid-Wabenfilter (200) gemäß einem der Ansprüche 1 bis 4, wobei der leere Zwischenraum (20) eine quadratische, achteckige oder kreisförmige Querschnittsgestalt aufweist.

6. Siliciumcarbid-Wabenfilter (200) gemäß einem der Ansprüche 1 bis 5, wobei ein Querschnitt der zweiten Außenumfangswand (17b) in einer Ebene senkrecht zu seiner Strömungspfadrichtung eine durch zwei sich in zwei senkrechten Richtungen und nächst der zweiten Außenumfangswand (17b) erstreckende Zellwände und eine Außenumfangsfläche (17b') der zweiten Außenumfangswand (17b) gebildete dreieckige Gestalt aufweist, und die maximale Dicke (L) der zweiten Außenumfangswand (17b), welche durch den Abstand zwischen der Mitten-Ecke (P) der Dreiecks-Gestalt und der Außenumfangsfläche (17b') definiert ist, größer ist als die Dicke der ersten Außenumfangswand (17a).

7. Siliciumcarbid-Wabenfilter (200) gemäß einem der Ansprüche 1 bis 6, wobei der Neigungswinkel der linearen Abfasung zu einer Seite des Vierecks hin 45° beträgt.

8. Siliciumcarbid-Wabenfilter (200) gemäß einem der Ansprüche 1 bis 7, wobei die Dicke jeder Zellwand (12) 0,17-0,31 mm beträgt.

9. Siliciumcarbid-Wabenfilter (200) gemäß einem der Ansprüche 1 bis 8, wobei, in einem Querschnitt des Wabensegments (211) in einer Ebene senkrecht zur Strömungspfad-Richtung, die Querschnittsfläche von hineinführenden Zellen (23b), deren Ausgangs-seitige Endoberflächen abgedichtet sind, größer ist als jene von herausführenden Zellen, deren Eingangs-seitige Endoberflächen abgedichtet sind.

## Revendications

1. Filtre en nid d'abeilles de carbure de silicium (200) comprenant des segments en nid d'abeilles (111) ayant chacun des parois cellulaires (12) formant des cellules définissant des pluralités de voies d'écoulement (13a, 13b) s'étendant longitudinalement entre les deux surfaces d'extrémité (15a, 15b), des bouchons (16a, 16b) scellant les surfaces d'extrémité (15a, 15b) desdites cellules alternativement en damier, et une paroi périphérique externe (17), la liaison de couches de matériau (19) remplissant des espaces du treillis entre lesdits segments en nid d'abeilles (111) pour les lier, et une couche de peau (11) recouvrant les segments en nid d'abeilles liés (111),
une forme de section transversale de chaque segment en nid d'abeilles (111) dans un plan perpendiculaire à sa direction de trajet d'écoulement étant un octogone ayant un chanfrein linéaire (C) au niveau de chaque coin d'un quadrilatère, l'octogone étant constitué alternativement par des premières parois périphériques externes (17a) correspondant aux côtés dudit quadrilatère et des secondes parois périphériques externes (17b) correspondant auxdits chanfreins linéaires (C),
des espaces d'intersection vacants (20) exempts du matériau de liaison étant formés dans des intersections ayant des contours formés par les secondes parois périphériques externes (17b) dans des espaces en treillis entre les segments en nid d'abeilles collés (111),
un rapport d'espace (t2/t1) défini par un rapport entre le diamètre t2 dudit espace d'intersection vacant (20) et l'épaisseur t1 de ladite couche de matériau de liaison (19) entre lesdites premières parois périphériques externes (17a) étant supérieur à 1,4, et l'épaisseur de la première paroi périphérique externe (17a) étant supérieure à 1,5 fois et 9 fois ou inférieure à celle de la paroi cellulaire (12) dans chaque segment en nid d'abeilles (111).

2. Filtre en nid d'abeilles de carbure de silicium (200) selon la revendication 1, dans lequel ledit quadrilatère constituant lesdites premières parois périphériques externes (17a) desdits segments en nid d'abeilles (111) est un carré.

3. Filtre en nid d'abeilles de carbure de silicium (200) selon la revendication 2, dans lequel la forme de section transversale dudit segment en nid d'abeilles (111) est un octogone obtenu par la formation d'un chanfrein (C) ayant un angle d'inclinaison de 45° au niveau de chaque coin d'un carré.

4. Filtre en nid d'abeilles de carbure de silicium (200) selon l'une quelconque des revendications 1 à 3, dans lequel ledit espace d'intersection vacant (20) a une forme de section transversale dont le contour est sensiblement en contact avec quatre secondes parois périphériques externes opposées (17b).

5. Filtre en nid d'abeilles de carbure de silicium (200) selon l'une quelconque des revendications 1 à 4, dans lequel ledit espace d'intersection vacant (20) a une forme de section transversale carrée, octogonale ou circulaire.

6. Filtre en nid d'abeilles de carbure de silicium (200) selon l'une quelconque des revendications 1 à 5, dans lequel une section transversale de ladite seconde paroi périphérique externe (17b) dans un plan perpendiculaire à sa direction de chemin d'écoulement a une forme triangulaire formée par deux parois cellulaires s'étendant dans deux directions perpendiculaires et les plus proches de ladite seconde paroi périphérique externe (17b) et une surface périphérique externe (17b') de ladite seconde paroi périphérique externe (17b), et l'épaisseur maximale (L) de ladite seconde paroi périphérique externe (17b), qui est définie par la distance entre le sommet central (P) de ladite forme triangulaire et ladite surface périphérique externe (17b'), est plus grande que l'épaisseur de ladite première paroi périphérique externe (17a).

7. Filtre en nid d'abeilles de carbure de silicium (200) selon l'une quelconque des revendications 1 à 6, dans lequel l'angle d'inclinaison dudit chanfrein linéaire par rapport à un côté dudit quadrilatère est de 45°.

8. Filtre en nid d'abeilles de carbure de silicium (200) selon l'une quelconque des revendications 1 à 7, dans lequel l'épaisseur de chaque paroi cellulaire (12) est de 0,17 à 0,31 mm.

9. Filtre en nid d'abeilles de carbure de silicium (200) selon l'une quelconque des revendications 1 à 8,
dans lequel, dans une section transversale dudit segment en nid d'abeilles (211) dans un plan perpendiculaire à la direction du trajet d'écoulement, les surfaces de section transversale des cellules d'introduction (23b) dont les surfaces d'extrémité côté sortie sont scellées sont plus grandes que celles des cellules de décharge dont les surfaces d'extrémité côté entrée sont scellées.
